# EUROPEAN PATENT APPLICATION

(11) **EP 4 604 277 A1**
(43) Date of publication of application: **20.08.2025**
(21) Application number: 24206408.7
(22) Date of filing: 14.10.2024
(51) Int. Cl.: H01M 50/103, H01M 50/147, H01M 50/15, H01M 50/169, H01M 50/176, H01M 50/188, H01M 50/528, H01M 50/531, H01M 50/566, H01M 50/548, H01M 50/553, H01M 50/557, H01M 10/04

(54) **SECONDARY BATTERY AND METHOD OF MANUFACTURING A SECONDARY BATTERY**

(30) Priority: 19.02.2024 KR 20240023760
(71) Applicant: SAMSUNG SDI CO., LTD., Yongin-si, Gyeonggi-do 17084 (KR)
(72) Inventor: Bae, Chaeeun, 17084 Yongin-Si, Gyeonggi-do (KR); Bae, Kwangsoo, 17084 Yongin-Si, Gyeonggi-do (KR); Lee, Junhyung, 17084 Yongin-Si, Gyeonggi-do (KR); Yong, Jun-Sun, 17084 Yongin-Si, Gyeonggi-do (KR); Kim, Jihwan, 17084 Yongin-Si, Gyeonggi-do (KR); Roh, Heyoungcheoul, 17084 Yongin-Si, Gyeonggi-do (KR); Lee, Jungwoo, 17084 Yongin-Si, Gyeonggi-do (KR)
(74) Representative: Gulde & Partner

(57) **Abstract**

A secondary battery comprises an electrode assembly, a case accommodating the electrode assembly, a subplate assembly coupled to a first side of the electrode assembly, and a cap assembly coupled to the subplate assembly. The subplate assembly comprises a subplate connected to the electrode assembly and a current collector coupled to the subplate, and the case comprises a bottom portion, a side portion connected to the bottom portion, and a cover facing the bottom portion. The cover is welded to the side portion of the case.

## Description

### BACKGROUND

### 1. Field

Aspects of embodiments of the present disclosure relate to a secondary battery and a method of manufacturing a secondary battery.

### 2. Description of the Related Art

A secondary battery refers to a rechargeable battery that may be charged and discharged a plurality of times. Such secondary batteries are mainly used in various applications such as electronics (e.g., smartphones, notebook computers, and tablets), electric vehicles, solar power generation, and emergency power supplies. For example, lithium (Li)-ion batteries are used in various electronic products and electric vehicles due to their high energy density and high charge and discharge efficiency.

Secondary batteries may be categorized as cylindrical secondary batteries, prismatic secondary batteries, and pouch secondary batteries, depending on the shape of the case. A prismatic secondary battery has a structure in which an electrode assembly is embedded in a cylindrical metal can. The electrode assembly is inserted into the prismatic metal can, and a cap plate is welded to seal the can. In a case where there is a poor or loose fit between a current collector and a terminal plate, the electrical characteristics of the secondary battery may be degraded.

The above information disclosed in this Background section is for enhancement of understanding of the background of the present disclosure, and therefore, it may contain information that does not constitute related (or prior) art.

### SUMMARY

An aspect of the present disclosure is to provide a secondary battery that may be configured to solve at least one of the above-described problems and a method of manufacturing a secondary batter.

These and other aspects and features of the present disclosure will be described in or will be apparent from the following description of embodiments of the present disclosure.

According to some embodiments of the present disclosure, a secondary battery comprises an electrode assembly, a case in which the electrode assembly is accommodated, a subplate assembly coupled to a first side of the electrode assembly, and a cap assembly coupled to the subplate assembly, wherein the subplate assembly comprises a subplate connected to the electrode assembly and a current collector coupled to the subplate, and the case comprises a bottom portion, a side portion connected to the bottom portion, and a cover facing the bottom portion, wherein the cover is welded to the side portion.

In some embodiments, the current collector may comprise a planar portion and a protruding portion, the planar portion and the protruding portion being integral.

In some embodiments, the case may further comprise a first open area and a second open area facing the first open area, and the cap assembly may comprise a cap plate covering at least one of the first open area or the second open area, a terminal plate coupled to the cap plate, and a sealing member disposed between the cap plate and the terminal plate.

In some embodiments, the secondary battery may further comprise a vent provided in the cover.

In some embodiments, the secondary battery may further comprise a vent provided in the bottom portion.

In some embodiments, the cover may comprise a first bend, and the weld region may be defined as a region where the first bend and the side portion overlap.

In some embodiments, the side portion may comprise a second bend, and the cover and the side portion may be welded in a region where first bend and the cover overlap and a region where the second bend and the cover overlap.

In some embodiments, the cover may comprise a stepped portion overlapping a portion of the side portion, and the stepped portion may be welded to the side portion.

In some embodiments, an area of the bottom portion may be less than an area of the side portion.

According to some embodiments of the present disclosure, a secondary battery comprises, an electrode assembly, a case in which the electrode assembly is accommodated, a subplate assembly coupled to a first side of the electrode assembly, and a cap assembly coupled to the subplate assembly, wherein the cap assembly comprises a terminal plate, the terminal platen is welded to the subplate assembly, and the case comprises a bottom portion, a side portion connected to the bottom portion, and a cover facing the bottom portion, wherein the cover is welded to the side portion.

In some embodiments, the side portion comprises a stepped portion that overlaps a portion of the cover, and the stepped portion is welded to the cover.

In some embodiments, the terminal plate comprises an upper terminal plate and a lower terminal plate, wherein the upper terminal plate and the lower terminal plate are formed of different materials.

According to some embodiments of the present disclosure, a method of manufacturing a secondary battery, the method comprises, coupling a first subplate assembly and a second subplate assembly to opposite sides of an electrode assembly, forming a cap-subplate electrode assembly by coupling a first cap assembly to the first subplate assembly and a second cap assembly to the second subplate assembly, inserting the cap-subplate electrode assembly into a case, wherein the case comprises a first open area, a second open area facing the first open area in a first direction, and a third open area open in a second direction that is orthogonal to the first direction, and welding a cover positioned in the third open area to the case.

In some embodiments, the method may further comprise, before welding the cover to the case, welding the first cap assembly positioned in the first open area to the case, and welding the second cap assembly positioned in the second open area to the case.

In some embodiments, the method may further comprise, welding the cover to the first cap assembly and welding the cover to the second cap assembly.

In some embodiments, the method may further comprise, welding the first cap assembly positioned in the first open area to the case, and welding the second cap assembly positioned in the second open area to the case.

In some embodiments, the first subplate assembly may comprise a current collector comprising a protruding portion, and the first cap assembly may comprise a terminal plate, the method may further comprises welding the protruding portion to the terminal plate.

In some embodiments, the cover may comprise a vent.

In some embodiments, the cover may comprise a first bend, and the welding of the cover to the case may comprise welding an overlapping portion of the first bend and a side portion of the case.

In some embodiments, the cover may comprise a second bend, and the welding of the cover to the case may comprise welding an overlapping portion of the second bend and the cover.

According to embodiments of the present disclosure, the cover may include the stepped portion, and the side portion may include the stepped portion. Due to the stepped shape of the stepped portions, the cover and the side portion may be welded together in an aligned state, thereby reducing defects in a secondary battery and improving the reliability of the secondary battery.

According to embodiments of the present disclosure, during the process of forming the cap-sub electrode assembly, the fitting and alignment of the current collector and the terminal plates are checked before the welding operation is performed. Accordingly, the defect rate of the secondary battery may be reduced and the reliability of the secondary battery may be improved.

According to embodiments of the present disclosure, the cover may be manufactured separately from the case body. Accordingly, in a case where the vent is provided on the cover, the difficulty of the manufacturing process may be reduced.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a perspective diagram showing a secondary battery according to some embodiments of the present disclosure;
FIG. 2 illustrates a perspective diagram showing a case according to some embodiments of the present disclosure;
FIG. 3 illustrates an exploded perspective diagram showing the case according to some embodiments of the present disclosure;
FIG. 4 illustrates an exploded diagram showing the case according to some embodiments of the present disclosure;
FIG. 5 illustrates an exploded perspective diagram showing the case according to some embodiments of the present disclosure;
FIG. 6 illustrates an exploded diagram showing the case according to some embodiments of the present disclosure;
FIG. 7 illustrates a cross-sectional diagram showing a secondary battery according to some embodiments of the present disclosure;
FIG. 8 illustrates an exploded diagram showing region R1 in FIG. 7;
FIG. 9 illustrates the first cap assembly according to some embodiments of the present disclosure;
FIG. 10 illustrates an exploded diagram showing region R2 in FIG. 7;
FIG. 11 illustrates the second cap assembly according to some embodiments of the present disclosure;
FIGS. 12 to 14 illustrate a method of manufacturing a secondary battery according to some embodiments of the present disclosure;
FIG. 15 illustrates a flowchart showing the method of manufacturing a secondary battery according to some embodiments of the present disclosure.

### DETAILED DESCRIPTION OF THE EMBODIMENTS

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the "components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

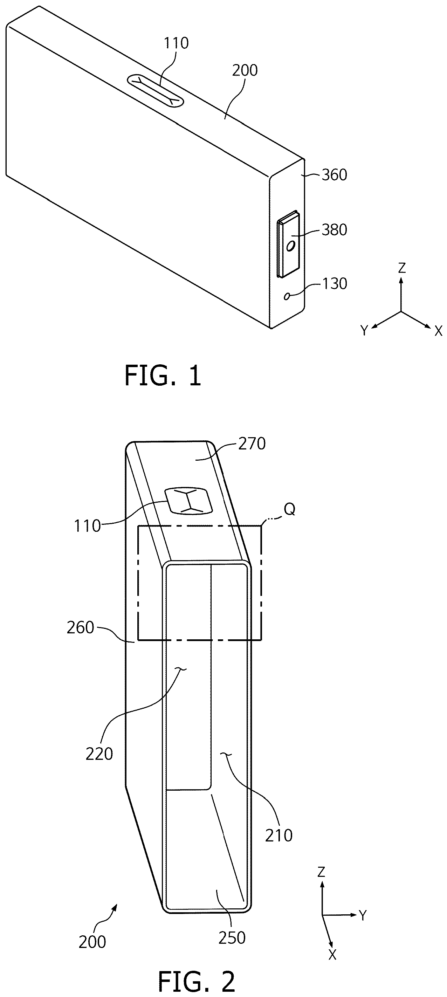

FIG. 1 illustrates a perspective diagram showing a secondary battery according to some embodiments of the present disclosure.

Referring to FIG. 1, the secondary battery may include an electrode assembly, a first subplate assembly, a second subplate assembly, a case 200, a first cap assembly, a second assembly, and the like.

The electrode assembly may be housed within the case 200. The electrode assembly may be provided by stacking (or laminating) or winding negative electrode plates, separators, and positive electrode plates having the shape of a thin plate or film.

In some embodiments, an electrolyte inlet 130 may be provided on a first cap plate 360. Electrolyte may be injected into the case 200 through the electrolyte inlet 130. In FIG. 1, the electrolyte inlet 130 is shown as being provided on the first cap plate 360, but is not limited thereto. After the injection of electrolyte is complete, the electrolyte inlet 130 may be sealed using a sealing means such as a stopper.

In some embodiments, a vent 110 may be provided on a cover. The vent 110 may prevent the secondary battery from exploding or prevent a chain exothermic reaction of secondary batteries arranged in close proximity.

In an example, the vent 110 may be configured to open when the internal pressure of the secondary battery exceeds a predetermined critical pressure. The critical pressure may be set differently depending on the application, material, purpose, and the like of the secondary battery. In addition or in another example, the vent 110 may be configured to open when the internal pressure exceeds a predetermined critical pressure.

In FIG. 1, the vent 110 is shown as being provided at the center of the cover, but is not limited thereto. Any number of vents 110 may be provided at any positions in a surface of the case 200. For example, two or more vents 110 may be provided on the cover.

A first cap assembly may be coupled to an open first side of the case 200. A second cap assembly may be coupled to an open second side of the case 200. The shape of the case 200 will be described in detail below.

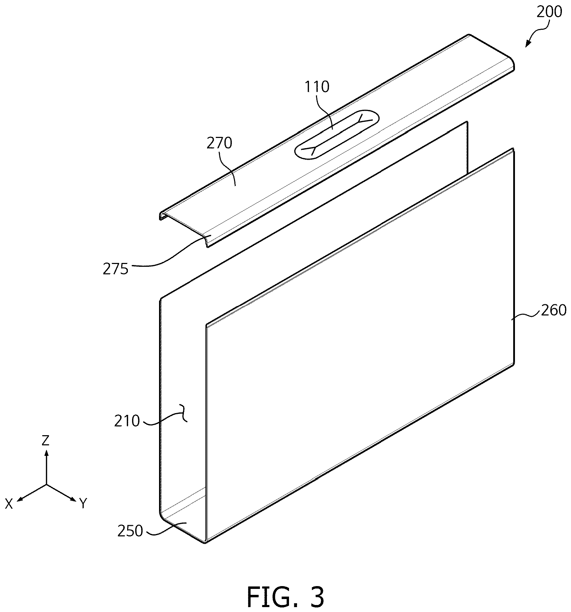

FIG. 2 illustrates a perspective diagram showing a case according to some embodiments of the present disclosure. FIG. 3 illustrates an exploded perspective diagram showing the case according to some embodiments of the present disclosure.

Referring to FIGS. 2 and 3, a case 200 may include a first open area 210, a second open area 220, a bottom portion 250, side portions 260, and a cover 270.

The case 200 may be formed of a conductive metal, such as aluminum (Al), an Al alloy, or Ni-plated steel.

A first direction X may refer to the X-axis direction. A second direction Y may be orthogonal to the first direction X. The second direction Y may refer to the Y-axis direction. A third direction Z may be orthogonal to both the first direction X and the second direction Y. The third direction Z may refer to the Z-axis direction.

The bottom portion 250 may extend in the first direction X. The first direction X may be the longitudinal direction of the case 200. The bottom portion 250 may face the cover 270 in the third direction Z. The bottom portion 250 and the cover 270 may face each other while being spaced apart in the third direction Z.

The side portions 260 may be connected to the bottom portion 250. The side portions 260 may be in contact with the cover 270. The area of the bottom portion 250 may be less than the area of the side portions 260. The side portions 260 may include a first side portion and a second side portion. The first side portion and the second side portion may face each other. The first side portion and the second side portion may face each other while being spaced apart in the second direction Y.

The first open area 210 and the second open area 220 may be provided on opposite sides of the case 200. The first open area 210 may face the second open area 220. The first open area 210 and the second open area 220 may face each other while being spaced apart in the first direction X. Each of the first open area 210 and the second open area 220 may be defined by the bottom portion 250, the side portions 260, and the cover 270.

In some embodiments, the vent 110 may be provided on the cover 270, but is not limited thereto. In some embodiments, the vent 110 may be provided on the bottom portion 250.

The cover 270 may be coupled to the side portions 260. Specifically, the cover 270 may be coupled to each of a first end of the first side portion and a first end of the second side portion.

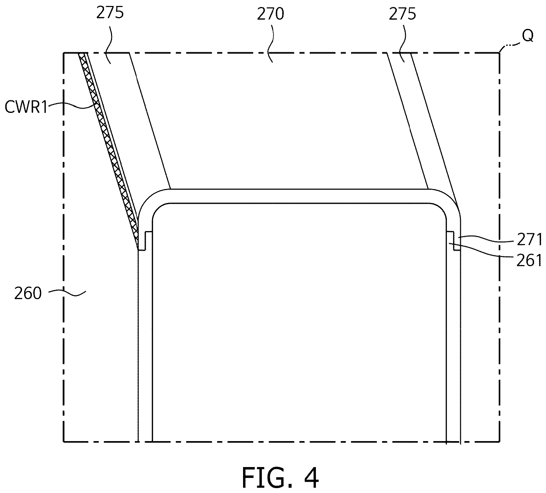

FIG. 4 illustrates an exploded diagram showing the case according to some embodiments of the present disclosure. For reference, FIG. 4 illustrates an exploded diagram showing Q region in FIG. 2. With reference to FIG. 4, the joining operation between the cover270 and the side portions 260 will be described in detail.

The cover 270 may include a plate, first bends 275, and stepped portions 271. A pair of first bends 275 may be provided on opposite edges of the plate. The first bends 275 may have a shape bent from the cover 270 toward the side portions 260. In other words, the first bends 275 may have a shape rounded from the second direction Y to the third direction Z. The first stepped portions 271 may be provided on ends of the first bends 275.

Each of the side portions 260 may include a second stepped portion 261. The second stepped portions 261 may b2e provided on ends of the side portions 260. In order for the side portions 260 and the cover 270 to be joined, the first stepped portions 271 and the second stepped portions 261 may overlap in the second direction Y. That is, as shown in FIG. 4, the first stepped portions 271 may have a shape corresponding to the second stepped portions 261.

The cover 270 may be welded (and joined) to the side portions 260. Specifically, the first stepped portions 271 and the second stepped portions 261 may be welded together. As a result, a first weld region CWR1 may be formed on each of the first stepped portions 271. The first weld region CWR1 may include a weld bead or the like. The first welding region CWR1 may extend in the first direction X.

In a secondary battery, the electrode assembly is inserted into the case, which may be sealed by welding the cover. However, if the case and the cover are misaligned, the case and the cover may not be joined, thereby resulting in leakage of the electrolyte.

According to some embodiments of the present disclosure, the cover 270 may include the first stepped portions 271, and the side portions 260 may include the second stepped portions 261. Because of the stepped shape of the first stepped portions 271 and the second stepped portions 261, the cover 270 and the side portions 260 may be welded together in an aligned state. Accordingly, defects in the secondary battery may be reduced, and the reliability of the secondary battery may be improved.

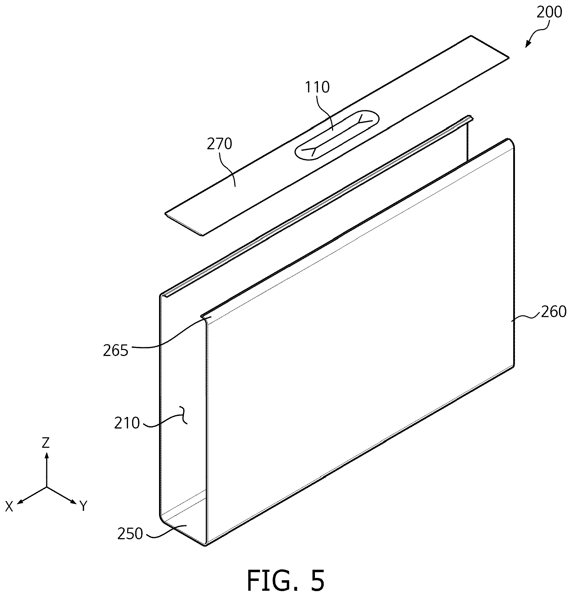

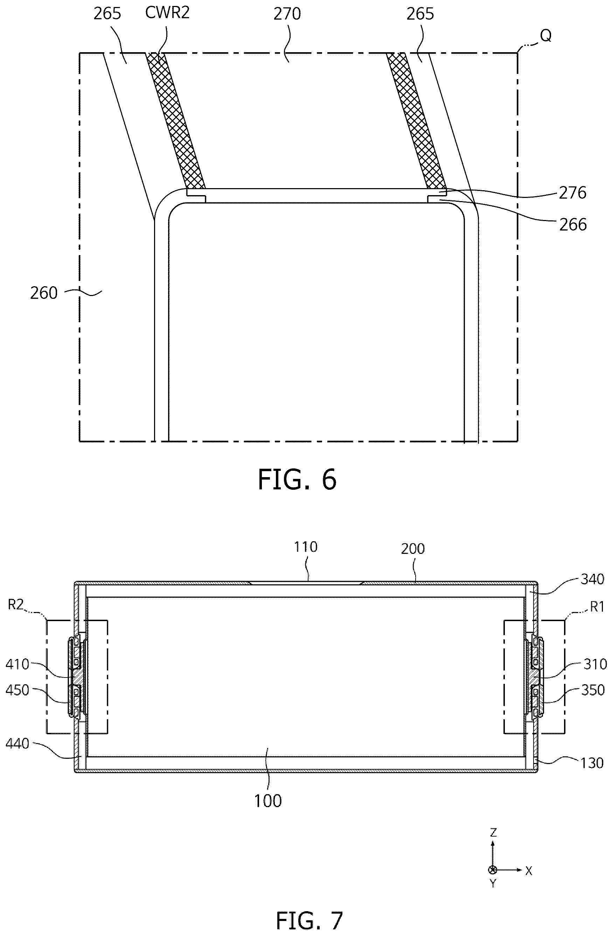

FIG. 5 illustrates an exploded perspective diagram showing the case according to some embodiments of the present disclosure. FIG. 6 illustrates an exploded diagram showing the case according to some embodiments of the present disclosure. For ease of description, the following description will focus on features that are different from those described with reference to FIGS. 2 to 4.

Referring to FIGS. 5 and 6, the cover 270 may include a plate and third stepped portions 276. The third stepped portions 276 may be provided on opposite edges of the plate.

Each of the side portions 260 may include a second bend 265 and a fourth stepped portion 266 on the distal end. The second bend 265 may have a shape bent from the side portion 260 toward the cover 270. In other words, the second bend 265 may have a rounded shape from the third direction Z to the second direction Y. The fourth stepped portion 266 may be provided on the end of the second bend 265.

In order for the side portions 260 and the cover 270 to be joined together, the third stepped portions 276 and the fourth stepped portions 266 may overlap in the third direction Z. That is, as shown in FIG. 6, the third stepped portions 276 may have a shape corresponding to the fourth stepped portions 266.

The cover 270 may be welded to the side portions 260. Specifically, the third stepped portions 276 and the fourth stepped portions 266 may be welded together. As a result, second weld regions CWR2 may be formed on the third stepped portions 276. Each of the second weld regions CWR2 may include a weld bead or the like. The second weld regions CWR2 may extend in the first direction X.

In a secondary battery, the electrode assembly may be inserted into the case, and the case may be sealed by welding the cover. However, when the case and the cover are misaligned, the case and the cover may not be joined together, thereby resulting in leakage of the electrolyte.

According to some embodiments of the present disclosure, the cover 270 may include the third stepped portions 276, and the side portions 260 may include the fourth stepped portions 266. Because of the stepped shape of the third stepped portions 276 and the fourth stepped portions 266, the cover 270 and the side portions 260 may be welded together in an aligned state. Accordingly, defects in the secondary battery may be reduced, and the reliability of the secondary battery may be improved.

FIG. 7 illustrates a cross-sectional diagram showing a secondary battery according to some embodiments of the present disclosure. For reference, FIG. 7 may be a cross-sectional diagram of the secondary battery of FIG. 1 taken on a plane defined by the first direction X and the third direction Z.

Referring to FIGS. 1 and 7, the secondary battery may include an electrode assembly 100, a case 200 accommodating the electrode assembly 100, a first subplate assembly 310, a second subplate assembly 410, a first cap assembly 350, and a second cap assembly 450. Herein, the case 200 may be the case 200 described above with reference to FIGS. 2 to 6.

The electrode assembly 100 may be accommodated in the case 200. The electrode assembly 100 may be provided by winding or stacking a laminate including a first electrode plate (not shown), a separator (not shown), and a second electrode plate (not shown) each formed of a thin plate or film. In a case where the electrode assembly 100 is a wound laminate, the axis of the winding may be parallel to the longitudinal direction of the case 200. The electrode assembly 100 may be a stack type instead of being a wound type, but the shape of the electrode assembly 100 of the present disclosure is not limited thereto. The electrode assembly 100 may be a Z stack electrode assembly in which a positive electrode plate and a negative electrode plate are provided on opposite sides of the separator bent into a Z-shaped stack. One or more electrode assemblies 100 may be stacked and received in the case 200 such that the long sides thereof are adjacent to each other. The present disclosure is not limited with respect to the number of electrode assemblies 100. In the electrode assembly 100, the first electrode plate may act as a positive electrode, and the second electrode plate may act as a negative electrode. The reverse is also possible.

The first electrode plate may be formed by applying a first electrode active material, such as graphite or carbon, to a first electrode collector plate formed of a metal foil of, for example, copper (Cu), a Cu alloy, nickel (Ni), or a Ni alloy, and may include a first electrode tab (or a first uncoated portion), which is a portion to which the first electrode active material is not applied. The first electrode tab may be a path for current flow between the first electrode plate and the first subplate assembly 310. In some examples, the first electrode tab may be formed by cutting the first electrode plate so that the first electrode tab protrudes from a first side when the first electrode plate is fabricated, and the first electrode plate may protrude further from the first side than the separator without additional cutting.

The second electrode plate is formed by applying a second electrode active material, such as a transition metal oxide, to a second electrode collector plate formed of a metal foil of, for example, aluminum (Al) or an Al alloy, and may include a second electrode tab (or a second uncoated portion), which is a portion to which the second electrode active material is not applied. The second electrode tab may be a path for current flow between the second electrode plate and the second subplate assembly 410. In some examples, the second electrode tab may be formed by cutting the second electrode plate so that the second electrode tab protrudes from a second side when the second electrode plate is fabricated, and the second electrode plate may protrude further from the second side than the separator without additional cutting.

In some examples, the first electrode tab may be positioned on the right end side of the electrode assembly, and the second electrode tab may be positioned on the left end side of the electrode assembly. The terms "left" and "right" are used herein for ease of description with respect to the secondary battery shown in FIG. 2, and the positions may change as the secondary battery is rotated left and right or up and down.

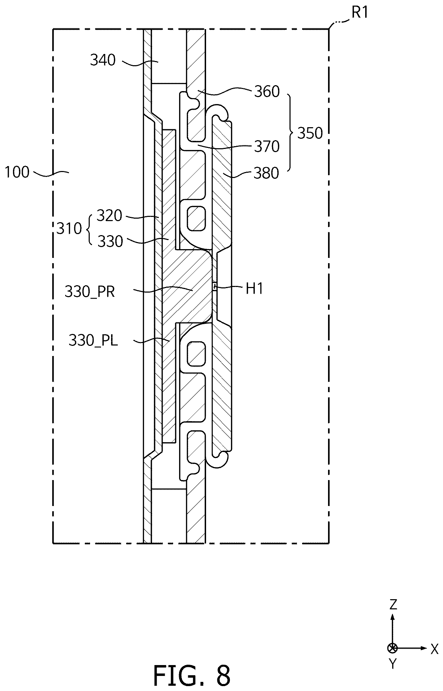

FIG. 8 illustrates an exploded diagram showing region R1 in FIG. 7.

Referring to FIG. 8, the first subplate assembly 310 and the first cap assembly 350 may be coupled to a first side of the electrode assembly 100.

The first subplate assembly 310 may be coupled to the first side of the electrode assembly 100 and be electrically connected to the first electrode plate (e.g., the positive electrode plate) of the electrode assembly 100. The first subplate assembly 310 may include a first subplate 320 and a first current collector 330.

The first subplate 320 may be coupled to a first electrode tab of the electrode assembly 100. For example, the first electrode tab may be welded to the first subplate 320. The first subplate 320 may be connected to the first electrode tab and be electrically connected to the first electrode plate.

The first current collector 330 may be coupled to the first subplate 320. For example, the first current collector 330 and the first subplate 320 may be welded together. The first current collector 330 and the first subplate 320 may be electrically connected to each other.

The first current collector 330 may include a first planar portion 330_PL and a first protruding portion 330_PR. The first planar portion 330_PL may be welded to the first subplate 320. The first protruding portion 330_PR may protrude from the first planar portion 330_PL, and may have the shape of, for example, a cylinder.

A first insulation member 340 may be disposed between the first subplate assembly 310 and the first cap assembly 350. The first insulation member 340 may prevent the first subplate 320 and a first cap plate 360 from contacting each other.

The first cap assembly 350 may include the first cap plate 360, a first sealing member 370, and a first terminal plate 380.

The first sealing member 370 may be coupled to the first cap plate 360. The first cap plate 360 may have a through-hole. The first sealing member 370 may provide a seal between the first terminal plate 380 and the first cap plate 360. The first sealing member 370 may include an insulating material. The first sealing member 370 may insulate the first cap plate 360 and the first terminal plate 380 from each other.

The first terminal plate 380 may be coupled to a surface of the first sealing member 370. The top surface of the first terminal plate 380 may have a recess. For example, the recess may be formed in a portion of the top surface of the first terminal plate 380 overlapping the first protruding portion 330_PR in the first direction X. The recess results in the thickness of the central portion of the first terminal plate 380 to be less than the thickness of the other portions.

The first terminal plate 380 may be a positive electrode terminal of a secondary battery. For example, a busbar may be welded to a surface of the first terminal plate 380 and be electrically connected to another secondary battery.

In some embodiments, the first terminal plate 380 may have a first hole H1. The first hole H1 may be provided in the recess of the first terminal plate 380. A portion of the top surface of the first protruding portion 330_PR may be exposed through the first hole H1. However, the present disclosure is not limited thereto. For example, the first terminal plate 380 may not be provided with the first hole H1, thereby completely covering the top surface of the first protruding portion 330_PR.

The first current collector 330 may be coupled to the first terminal plate 380. Specifically, the first protruding portion 330_PR may extend through the through hole of the first sealing member 370 and contact the first terminal plate 380. The first protruding portion 330_PR and the first terminal plate 380 may be welded together.

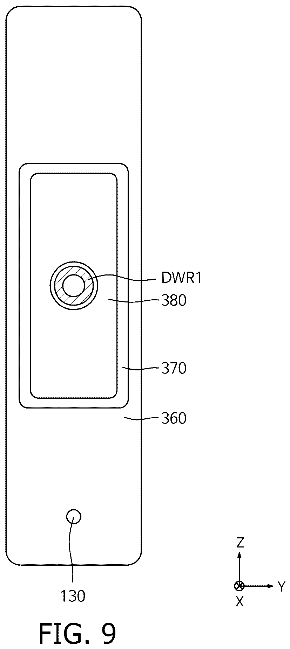

FIG. 9 illustrates the first cap assembly according to some embodiments of the present disclosure. For reference, FIG. 9 may be a plan view of the secondary battery of FIG. 7 viewed in the first direction X.

Referring to FIG. 9, a first terminal weld region DWR1 may be provided on the top surface of the first terminal plate 380. A welding process may be performed in the first terminal weld region DWR1, thereby joining the first terminal plate 380 and the first current collector 330. Accordingly, the first current collector 330 and the first terminal plate 380 may be electrically connected. A weld bead or the like may be provided on the first terminal weld region DWR1 as a result of the welding process. The first terminal weld region DWR1 is shown as having a donut shape, but is not limited thereto. The first terminal weld region DWR1 may have any shape in which the first terminal plate 380 and the first current collector 330 are welded together.

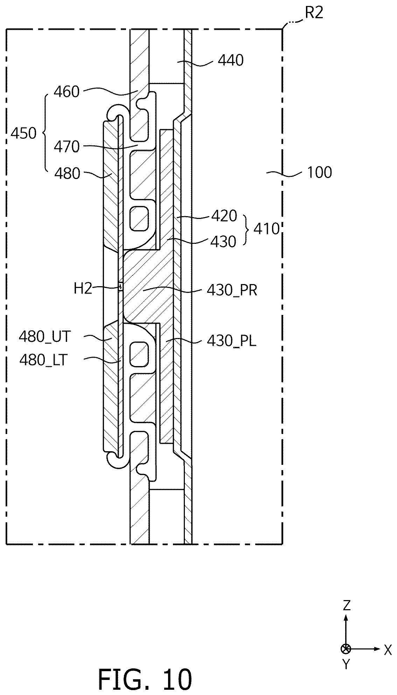

FIG. 10 illustrates an exploded diagram showing region R2 in FIG. 7.

Referring to FIG. 6, the second subplate assembly 410 and the second cap assembly 450 may be coupled to the second side of the electrode assembly 100.

The second subplate assembly 410 may be coupled to the second side of the electrode assembly 100 and electrically connected to a second electrode plate (e.g., a negative electrode plate) of the electrode assembly 100. The second first subplate assembly 410 may include a second first subplate 420 and a second current collector 430.

The second first subplate 420 may be coupled to a second electrode tab of the electrode assembly 100. For example, the second electrode tab may be welded to the second subplate 420. The second subplate 420 may be connected to the second electrode tab, and may be electrically connected to the second electrode plate.

The second current collector 430 may be coupled to the second first subplate 420. For example, the second current collector 430 and the second first subplate 420 may be welded together. The second current collector 430 may be electrically connected to the second first subplate 420.

The second current collector 430 may include a second planar portion 430_PL and a second protruding portion 430_PR. The second planar portion 430_PL may be welded to the second first subplate 420. The second protruding portion 430_PR may protrude from the second planar portion 430_PL, and may have the shape of, for example, a cylinder.

A second insulation member440 may be disposed between the second subplate assembly 410 and the second cap assembly 450. The second insulation member 440 may prevent the second subplate 420 and a second cap plate 460 from contacting each other.

The second cap assembly 450 may include the second cap plate 460, a second sealing member 470, and a second terminal plate 480.

The second sealing member 470 may be coupled to the second cap plate 460. The second cap plate 460 may have a through-hole. The second sealing member 470 may provide a seal between the second terminal plate 480 and the second cap plate 460. The second sealing member 470 may include an insulating material. The second sealing member 470 may insulate the second cap plate 460 and the second terminal plate 480 from each other.

The second terminal plate 480 may be coupled to a surface of the second sealing member 470. The second terminal plate 480 may be a positive electrode terminal of the secondary battery. A busbar may be welded to a surface of the second terminal plate 480 to be electrically connected to another secondary battery. For example, the busbar may be welded to an upper terminal plate 480_UT.

The second terminal plate 480 may include the upper terminal plate 480_UT and a lower terminal plate 480_LT. The lower terminal plate 480_LT may be in contact with the second sealing member 470. The upper terminal plate 480_UT may be disposed on top of the lower terminal plate 480_LT. That is, the lower terminal plate 480_LT may be disposed between the sealing member 470 and the upper terminal plate 480_UT.

The top surface of the second terminal plate 480 may have a recess. The upper terminal plate 480_UT may expose a portion of the lower terminal plate 480_LT. For example, a portion of the lower terminal plate 480_LT may be exposed through a recess in the central portion of the upper terminal plate 480_UT. The recess of the upper terminal plate 480_UT may overlap the second protruding portion 430_PR in the first direction X. The recess of the upper terminal plate 480_UT may the same shape as the recess of the first terminal plate 380 in FIG. 8.

In some embodiments, the upper terminal plate 480_UT and the lower terminal plate 480_LT may be formed of different materials. The upper terminal plate 480_UT may include, for example, aluminum (Al). The lower terminal plate 480_LT may include, for example, copper (Cu). That is, the upper terminal plate 480_UT may be a conductive material containing Al as a major component, and the lower terminal plate 480_LT may be a conductive material containing Cu as a major component. As used herein, the term major component means the predominant content material among the materials of the alloy, in the language of a person having ordinary knowledge in the art.

Although the upper terminal plate 480_UT has been described as including Al and the lower terminal plate 480_LT has been described as including Cu, this should be understood as illustrative. In some embodiments, the upper terminal plate 480_UT and the lower terminal plate 480_LT may include other conductive metals.

In some embodiments, the lower terminal plate 480_LT may include a second hole H2. The second hole H2 may be formed in the lower terminal plate 480_LT and exposed through the upper terminal plate 480_UT. A portion of the top surface of the second protruding portion 430_PR may be exposed through the hole H2. However, the present disclosure is not limited thereto. For example, the second terminal plate 480 may not be provided with the second hole H2, thereby completely covering the top surface of the second protruding portion 430_PR.

The second current collector 430 may be coupled to the second terminal plate 480. Specifically, the second protruding portion 430_PR may extend through the through hole of the second sealing member 470 to contact the lower terminal plate 480_LT. The second protruding portion 430_PR and the second terminal plate 480 may be welded.

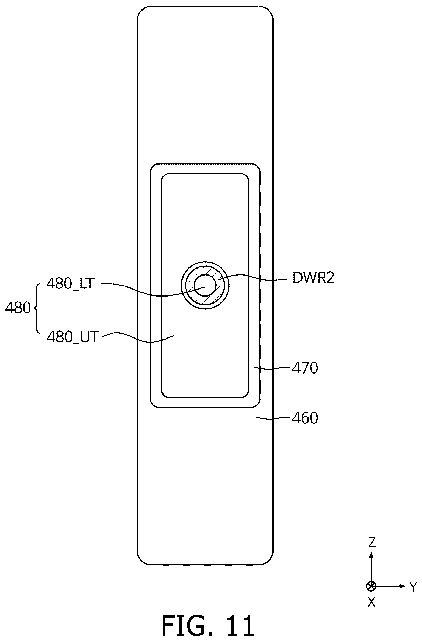

FIG. 11 illustrates the second cap assembly according to some embodiments of the present disclosure. For reference, FIG. 11 may be a plan view of the secondary battery of FIG. 7 viewed in the first direction X.

Referring to FIG. 11, a second terminal weld region DWR2 may be provided on the top surface of the lower terminal plate 480_LT. A welding process may be performed in the second terminal weld region DWR2 to join the second terminal plate 480 and the second current collector 430. Accordingly, the second current collector 430 and the second terminal plate 480 may be electrically connected. A weld bead or the like may be provided in the second terminal weld region DWR2 as a result of the welding process. The second terminal weld region DWR2 is shown as having a donut shape, but is not limited thereto. The second terminal weld region DWR2 may have any shape, by which the second terminal plate 480 and the second current collector 430 are welded together.

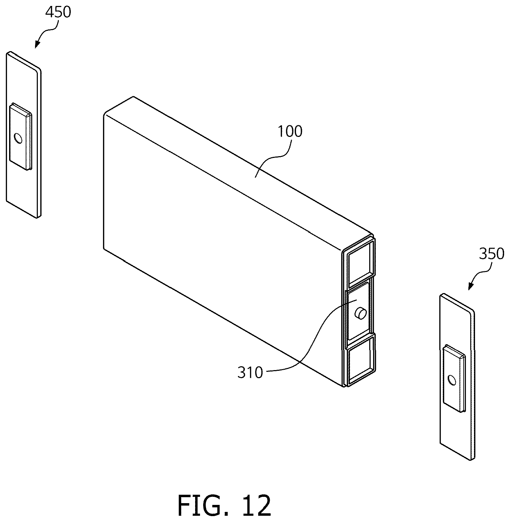

FIGS. 12 to 14 illustrate a method of manufacturing a secondary battery according to some embodiments of the present disclosure.

Referring to FIG. 12, a cap-subplate electrode assembly may be formed by combining the first subplate assembly 310, the second subplate assembly, the first cap assembly 350, and the second cap assembly 450 on the electrode assembly 100.

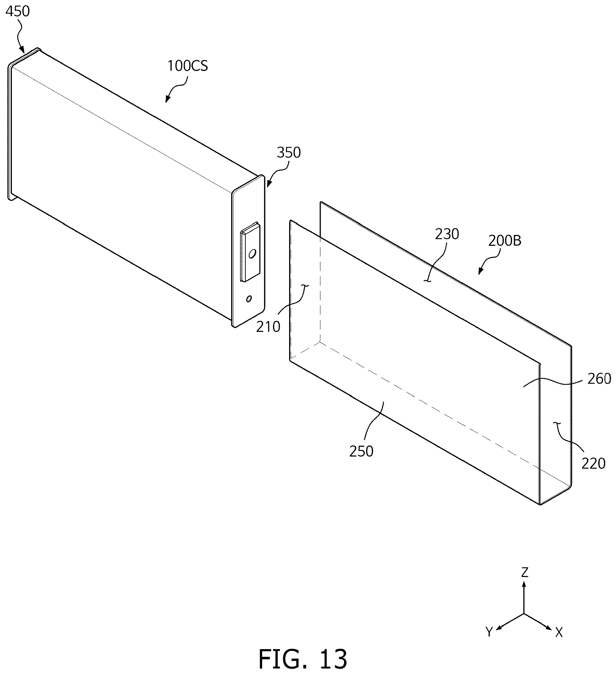

Specifically, the first subplate assembly 310 may be coupled to a first side of the electrode assembly 100, and a second subplate assembly may be coupled to a second side of the electrode assembly 100. Thereafter, the first cap assembly 350 may be coupled to a surface of the first subplate assembly 310, and the second cap assembly 450 may be coupled to a surface of the second subplate assembly, thereby forming a cap-subplate electrode assembly (100CS in FIG. 13).

The first subplate assembly 310 and the first cap assembly 350 may be welded together to form a first terminal weld region (DWR1 in FIG. 9). Specifically, the first protruding portion (330_PR in FIG. 8) and the first terminal plate (380 in FIG. 8) may be welded together to form the first terminal weld region (DWR1).

Referring to FIG. 13, the cap-subplate electrode assembly 100CS may be inserted into a case body 200B.

The case body 200B may include a first open area 210, a second open area 220, a third open area 230, a bottom portion 250, and side portions 260. The description of the first open area 210, the second open area 220, the bottom portion 250, and the side portions 260 may be substantially the same as described with reference to FIG. 2. For ease of description, the following description will focus on features that are different from those described above.

The third open area 230 may be a portion open in the third direction Z. The third open area 230 may be opposite to the bottom portion 250 in the third direction Z.

In some embodiments, the side portions 260 may include the second bends 265 in FIG. 5.

The cap-subplate electrode assembly 100CS may be inserted into the case body 200B so that the first cap assembly 350 is positioned in the second open area 220 and the second cap assembly 450 is positioned in the first open area 210. The cap-subplate electrode assembly 100CS may be inserted into the case body 200B by moving in the first direction X or the third direction Z.

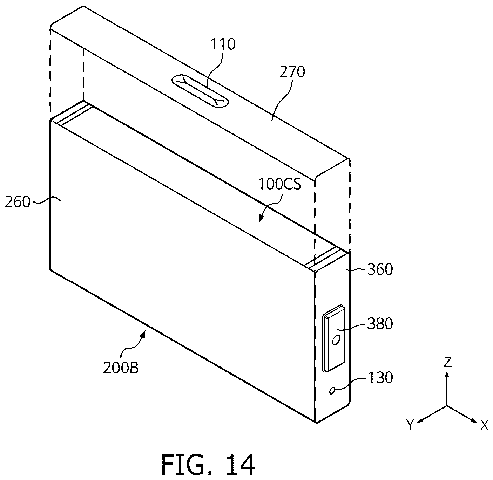

Referring to FIGS. 13 and 14, the cover 270 may be joined to a surface of the case body 200B.

Specifically, the cover 270 may be welded to the third open area 230 of the case body 200B.

In some embodiments, the cover 270 may include vent 110, but the present disclosure is not limited thereto. For example, the vent 110 may be provided on the bottom portion 250. Because the cover 270 is fabricated separately from the case body 200B, the manufacturing process may be easier when the vent 110 is provided on the cover 270.

In some embodiments, the cover 270 may include the first bends 275 in FIG. 3.

In some embodiments, before the cover 270 is welded to the case body 200B, the case body 200B, the first cap assembly 350, and the second cap assembly 450 may be joined. Specifically, the first cap assembly 350 in the second open area 220 may be welded to the case body 200B, and the second cap assembly 450 in the first open area 210 may be welded to the case body 200B. Thereafter, the cover 270 in the third open area 230 may be welded to the case body 200B.

In some embodiments, a method of joining the the cover 270 in the third open area 230 and the case body 200B by welding may include joining the side portions 260 and the cover 270 by welding the cover 270 to each of the first cap assembly 350 and the second cap assembly 450.

By coupling the cover 270 in the third open area 230, the secondary battery of FIG. 1 may be manufactured.

A secondary battery may be manufactured by coupling the electrode assembly and the current collector and coupling the current collector and the terminal plate. In such a secondary battery manufacturing process, the current collector and the terminal plate may not be tightly fitted to each other such that a defect may occur in the welding and joining operation. For example, when the electrode assembly and the current collector are coupled and the cap plate is coupled to a surface of the case, it may not be possible to determine whether the terminal plate and the current collector are tightly fitted to each other. When the current collector and the terminal plate are not tightly fitted or are not aligned, the electrical characteristics of the secondary battery may be degraded.

A method of manufacturing a secondary battery according to some embodiments of the present disclosure may include inserting the cap-subplate electrode assembly 100CS into the case body 200B and joining the cover 270 to the case body 200B. Accordingly, in the process of forming the cap-subplate electrode assembly 100CS, after checking to ensure a tightly fit and alignment of the current collectors (capacitors) 330 and 430 and the terminal plates 380 and 480, the joint may be welded. Accordingly, the defect rate of the secondary battery may be reduced and the reliability of the secondary battery may be improved.

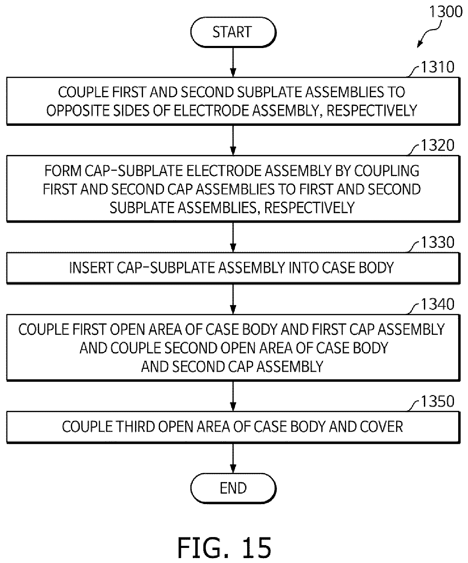

FIG. 15 illustrates a flowchart showing the method of manufacturing a secondary battery according to some embodiments of the present disclosure.

Referring to FIG. 15, in step 1310 each of a first subplate assembly and a second subplate assembly may be coupled to opposite sides of the electrode assembly, respectively.

In step 1320, first cap assembly may be coupled to the first subplate assembly and a second cap assembly may be coupled to the second subplate assembly to form a cap-subplate electrode assembly.

However, the manufacturing method according to the present disclosure is not limited to the above-described order. In some embodiments, the first subplate assembly and the first cap assembly may be coupled to a first side of the electrode assembly, and the second subplate assembly and the second cap assembly may be coupled to a second side of the electrode assembly to form the cap-subplate electrode assembly.

The cap-subplate electrode assembly may be inserted into the case body in step 1330. The case body may include a first open area, a second open area, and a third open area. The first cap assembly may be positioned in the first open area. The second cap assembly may be positioned in the second open area.

The first cap assembly in the first open area may be coupled to the case body, and the second cap assembly in the second open area may be coupled to the case body in step 1340.

Thereafter, the cover in the third open area and the case body may be joined together in step 1350. Specifically, a secondary battery may be manufactured by joining the cover to the side portions of the case body, the first cap assembly, and the second cap assembly by welding.

Although the present disclosure has been described above with respect to embodiments thereof, the present disclosure is not limited thereto. Various modifications and variations can be made thereto by those skilled in the art within the equivalent scope of the appended claims.

**<Description of Reference Symbols>**

| | | | |
|---|---|---|---|
| 100: | electrode assembly | 200: | case |
| 200B: | case body | 210: | first open area |
| 220: | second open area | 230: | third open area |
| 250: | bottom portion | 260: | side portion |
| 265: | second bend | 270: | cover |
| 275: | first bend | 310: | first subplate assembly |
| 350: | first cap assembly | 360: | first cap plate |
| 410: | second subplate assembly | 450: | second cap assembly |
| 460: | second cap plate | CWR1: | first weld region |
| CWR2: | second weld region | | |

## Claims

1. A secondary battery comprising:
an electrode assembly (100);
a case (200) in which the electrode assembly (100) is accommodated;
a subplate assembly (310) coupled to a first side of the electrode assembly 100; and
a cap assembly (350) coupled to the subplate assembly (310),
wherein the subplate assembly (310) comprises a subplate (320) connected to the electrode assembly (100) and a current collector (330) coupled to the subplate (320),
wherein the case (200) comprises a bottom portion (250), a side portion (260) connected to the bottom portion (250), and a cover (270) facing the bottom portion (250), and
wherein the second battery is formed such that the cover (270) is welded to the side portion (260).

2. The secondary battery as recited in claim 1, wherein the current collector (330) comprises a planar portion (330_PL) and a protruding portion (330_PR), with the planar portion (330_PL) and the protruding portion (330_PR) being integral.

3. The secondary battery as recited in claim 1 or 2, wherein the case (200) further comprises a first open area (210) and a second open area (220) facing the first open area (210), and
wherein the cap assembly (350) comprises a cap plate (360) covering at least one of the first open area (210) or the second open area (220), a terminal plate (380) coupled to the cap plate (360), and a sealing member (370) disposed between the cap plate (360) and the terminal plate (380).

4. The secondary battery as recited in any of the preceding claims, further comprising a vent (110) provided in the cover (270).

5. The secondary battery as recited in any of claims 1 to 3, further comprising a vent (110) provided in the bottom portion (250).

6. The secondary battery as recited in any of the preceding claims, wherein the cover (270) comprises a bend (275), and
the second battery is formed such that the cover (270) is welded to the side portion (260) in a region where the bend (275) and the side portion (270) overlap.

7. The secondary battery as recited in claim 6, wherein the bend is a first bend (275),
wherein the side portion (260) comprises a second bend (265), and
the second battery is formed such that the cover (270) and the side portion (260) are welded in a region where the first bend (275) and the cover (270) overlap and a region where the second bend (265) and the cover (270) overlap.

8. The secondary battery as recited in any of the preceding claims, wherein the cover (270) comprises a stepped portion (271) overlapping a portion of the side portion (260), and the stepped portion (271) is welded to the side portion (260).

9. The secondary battery as recited in any of the preceding claims, wherein an area of the bottom portion (250) is less than an area of the side portion (260).

10. A method of manufacturing a secondary battery of any of the preceding claims, the method comprising:
coupling a first subplate assembly (310) and a second subplate assembly (410) to opposite sides of an electrode assembly (100);
forming a cap-subplate electrode assembly (100CS) by coupling a first cap assembly (350) to the first subplate assembly (310) and a second cap assembly (450) to the second subplate assembly (410);
inserting the cap-subplate electrode assembly (100CS) into a case (200), wherein the case (200) comprises a first open area (210), a second open area (220) facing the first open area (210) in a first direction,, and a third open area (230) open in a second direction that is orthogonal to the first direction; and
welding a cover (270)positioned in the third open area (230) to the case (200).

11. The method as recited in claim 10, further comprising, before welding the cover (270) to the case (200):
welding the first cap assembly (350) positioned in the first open area (210) to the case (200); and
welding the second cap assembly (450) positioned in the second open area (220) to the case.

12. The method as recited in claim 10 or 11, further comprising welding the cover (270) to the first cap assembly (350) and welding the cover (270) to the second cap assembly (450).

13. The method as recited in any of claims 10 to 12, further comprising welding the first cap assembly (350) positioned in the first open area to the case, and welding the second cap assembly (450) positioned in the second open area to the case.

14. The method as recited in any of claims 10 to 13,
wherein the first subplate assembly (310) comprises a current collector comprising a protruding portion, and
the first cap assembly (350) comprises a terminal plate, the method further comprising welding the protruding portion to the terminal plate, and/or
the cover comprises a vent.

15. The method as recited in any of claims 10 to 14,
wherein the cover (200) comprises a first bend, and the welding of the cover to the case comprises welding an overlapping portion of the first bend and a side portion of the case, and/or
wherein the cover (200) comprises a second bend, and the welding of the cover to the case comprises welding an overlapping portion of the second bend and the cover.
